# FASCICULE DE BREVET EUROPEEN

(11) **EP 0 666 325 B1**
(45) Date de publication et mention de la délivrance du brevet: **11.11.1998**
(21) Numéro de dépôt: 95400226.7
(22) Date de dépôt: 02.02.1995
(51) Int. Cl.: C21C 5/52, H05B 7/06, F27D 11/10

(54) **Four à courant continu de fusion de métal**
Gleichstromofen zum Schmelzen von Metall
Direct curvent furnace for melting of metal

(30) Priorité: 04.02.1994 FR 9401300
(43) Date de publication de la demande: 09.08.1995
(73) Titulaire: KVAERNER CLECIM, 95864 Cergy Pontoise Cedex (FR)
(72) Inventeur: Goujet, Pierre, F-42400 Saint-Chamond (FR); Bonnet, Claude, F-42160 Andrezieux Boutheon (FR)
(74) Mandataire: Michelet, Alain

(56) Documents cités:
- EP-A- 0 150 484
- EP-A- 0 169 100
- EP-A- 0 423 003
- DE-C- 282 162
- FR-A- 2 577 311

## Description

L'invention concerne la réalisation de fours électriques à courant continu pour la fusion de métal.

On sait que l'élaboration d'un métal fondu et, notamment, de l'acier, peut se faire à partir d'une matière ferreuse telle que de la ferraille, à l'intérieur d'un four électrique chauffé par des électrodes reliées à une source de courant électrique pour la production d'arcs électriques entre les électrodes et la ferraille ou le bain de métal fondu.

Un four électrique de fusion de métal comprend, généralement, une cuve à axe sensiblement vertical, un couvercle amovible de fermeture et au moins une électrode consommable qui traverse le couvercle pour pénétrer à l'intérieur de la cuve. Celle-ci est constituée d'un fond en forme de cuvette, recouvert de matière réfractaire, formant la sole du four, et d'une paroi latérale refroidie, généralement, par circulation d'eau.

Un tel four électrique peut être alimenté en courant alternatif ou continu.

Dans le cas d'une alimentation en courant continu, le four est muni d'au moins une électrode placée dans le fond de la cuve et traversant la sole.

Les électrodes consommables et les électrodes de sole sont reliées, respectivement, aux deux pôles d'une source de courant continu. Généralement, les électrodes consommables sont branchées sur le pôle négatif et fonctionnent en cathodes, chaque électrode de sole formant une anode.

Les électrodes de sole peuvent être constituées de différentes façons mais comprennent, d'une façon générale, un élément conducteur qui s'étend sur toute l'épaisseur de la sole en matière réfractaire, entre une extrémité externe reliée à la source de courant et une extrémité interne qui débouche à l'intérieur de la cuve.

Au début d'une opération de fusion, le four est chargé en ferraille et une partie de celle-ci vient au contact des extrémités internes des électrodes de sole.

Pour améliorer le contact électrique, on peut laisser dans le fond de la sole une certaine quantité de métal fondu provenant de l'opération précédente.

Il se forme ainsi des arcs électriques entre l'électrode consommable et la ferraille qui provoquent la fusion de celle-ci, et le -métal fondu forme un bain métallique qui remplit progressivement le fond en forme de cuvette de la cuve.

La matière réfractaire recouvrant le fond, qui est soumise à des températures très élevées et se trouve au contact du métal fondu, s'use assez rapidement et la paroi métallique formant la face extérieure du fond risque de se déformer dans les zones où l'épaisseur de réfractaire est réduite, de telles déformations augmentant les risques de détérioration du réfractaire. Il en résulte que l'on doit arrêter le fonctionnement du four après un certain nombre de coulées pour le laisser refroidir afin de réparer ou refaire entièrement le revêtement réfractaire. De telles opérations sont assez longues et diminuent la productivité de l'installation.

On peut faciliter ces opérations de maintenance en démontant entièrement le fond pour le transférer dans une zone de réparation en le remplaçant immédiatement par un fond neuf, ce qui diminue le temps d'arrêt. Il faut cependant disposer d'un système particulier de démontage et de manutention du fond de la cuve.

On peut également procéder à l'échange standard de l'ensemble de la cuve mais le poids important de celle-ci nécessite une forte capacité de levage des engins de manutention associés au four.

Par ailleurs, on a constaté que, dans un four à courant continu, la partie du revêtement réfractaire entourant chaque électrode de sole était soumise à une usure accrue, ce qui diminue encore le nombre de coulées possibles au cours d'un cycle.

L'invention remédie à de tels inconvénients grâce à une nouvelle forme de réalisation du fond de la cuve qui permet d'effectuer un nombre plus important de coulées au cours d'un même cycle et d'améliorer la résistance à l'usure des électrodes de sole sans compliquer exagérément la réalisation du four et les opérations de maintenance.

L'invention s'applique donc, d'une façon générale, à un four électrique à courant continu comportant une cuve à axe sensiblement vertical ayant un fond en forme de cuvette et une paroi latérale, un couvercle amovible de fermeture de la cuve et au moins deux électrodes reliées chacune à l'un des deux pôles d'une source de courant électrique continu, respectivement au moins une électrode consommable traversant le couvercle pour pénétrer dans la cuve et au moins une électrode de sole traversant le fond de la cuve, ce dernier étant constitué d'une paroi externe métallique recouverte d'un revêtement en matière réfractaire formant la sole du four et dont l'épaisseur est déterminée pour résister à un certain nombre de coulées.

Conformément à l'invention, la paroi externe du fond de la cuve comporte, au moins à l'emplacement de chaque électrode de sole, au moins une partie s'étendant en saillie vers le bas et formant un bossage limité par une face sensiblement plane de fixation de la partie externe de l'électrode et une face latérale qui entoure l'électrode à une certaine distance de celle-ci et se raccorde à la partie restante de la paroi métallique externe du fond, l'espace annulaire entre l'électrode et la face latérale dudit bossage étant rempli d'une matière réfractaire s'étendant sur toute la longueur de l'électrode entre la plaque de fixation et la face interne de la cuve, et se raccordant au revêtement réfractaire recouvrant la partie restante du fond.

FR-A-2 577 311 divulgue un four électrique à courant continu dont l'électrode de sole est entourée de parties refroidies en cuivre. Ces parties forment un bossage saillant vers le bas qui sert pour le refroidissement à l'eau et pour l'alimentation électrique et ne fait pas partie du fond revêtu d'une matière réfractaire.

Dans le cas où l'on utilise plusieurs électrodes de sole séparées les unes des autres, le fond de la cuve peut être muni de plusieurs parties en saillie en forme de bossages ménagées sur la paroi externe du fond et entourant chacun une électrode jusqu'à une plaque de fixation de celle-ci.

De préférence, chaque électrode est entourée d'une pièce tubulaire en matière réfractaire spéciale qui s'étend sur toute la longueur de l'électrode entre la plaque de fixation et la face interne de la sole. Cette pièce tubulaire peut remplir tout l'espace annulaire entre l'électrode et la paroi latérale de la partie en saillie correspondante. Mais elle peut aussi être entourée d'une gaine en matière réfractaire de même nature que celle de la partie restante de la sole.

Dans le cas où les électrodes de sole sont relativement rapprochées l'une de l'autre, le fond de la cuve peut être muni d'une partie en saillie unique limitée par une paroi latérale qui entoure l'ensemble des électrodes à une certaine distance de celles-ci et se raccorde, d'un côté à la paroi externe du fond et de l'autre à une plaque de fixation commune à l'ensemble des électrodes.

De préférence, chacune des électrodes de sole est entourée d'une pièce tubulaire en matière réfractaire spéciale, qui s'étend sur toute la hauteur de l'électrode entre la plaque de fixation et la face interne de la sole, l'espace entre chaque pièce tubulaire et la paroi latérale de la partie en saillie étant rempli d'une matière réfractaire de même nature que celle qui recouvre la partie restante du fond.

Selon une autre caractéristique essentielle de l'invention, chaque électrode de sole est associée à des moyens de refroidissement externe et la largeur et la longueur de la paroi latérale limitant chaque bossage sont déterminées en fonction de la conductivité thermique de la matière réfractaire remplissant l'espace annulaire entre chaque électrode et ladite paroi latérale, et de l'élévation de température prévisible de l'électrode, en tenant compte du refroidissement externe, de façon que la température de ladite paroi latérale et de la plaque de fixation de l'électrode ne dépasse pas un niveau déterminé.

Du fait que chaque bossage s'étend à l'extérieur du fond, le refroidissement peut être effectué par simple circulation d'air, éventuellement forcée, la paroi latérale du bossage pouvant être munie d'ailettes.

Il est également possible d'associer à chaque électrode de sole un moyen de refroidissement direct, par exemple par circulation d'eau dans un manchon qui entoure la partie de l'électrode sortant du bossage.

Grâce à ces dispositions, la résistance à l'usure de la partie du réfractaire entourant l'électrode est accrue.

D'une façon générale, la longueur et l'épaisseur de l'espace annulaire entourant chaque électrode de sole à l'intérieur de chaque partie en saillie sont déterminées en tenant compte de la nature de la matière réfractaire remplissant ledit espace annulaire de façon que celle-ci résiste, pour chaque cycle, à un nombre souhaité de coulées, et l'épaisseur de matière réfractaire recouvrant la partie restante du fond est déterminée en tenant compte de la nature de ladite matière réfractaire de façon à résister à l'usure sensiblement pour le même nombre de coulées.

Mais l'invention sera mieux comprise par la description suivante de certains modes de réalisation donnés à titre d'exemples et représentés sur les dessins annexés.

La Figure 1 est une vue en coupe longitudinale d'un four électrique équipé d'une cuve selon l'invention.

La Figure 2 est une vue schématique de dessus est une vue de dessus de la cuve.

La Figure 3 est une vue en coupe transversale selon la ligne III/III de la Figure 2.

Les Figures 4, 5, 6, montrent, respectivement en coupe longitudinale, en vue de dessus et en coupe transversale, un autre mode de réalisation de l'invention.

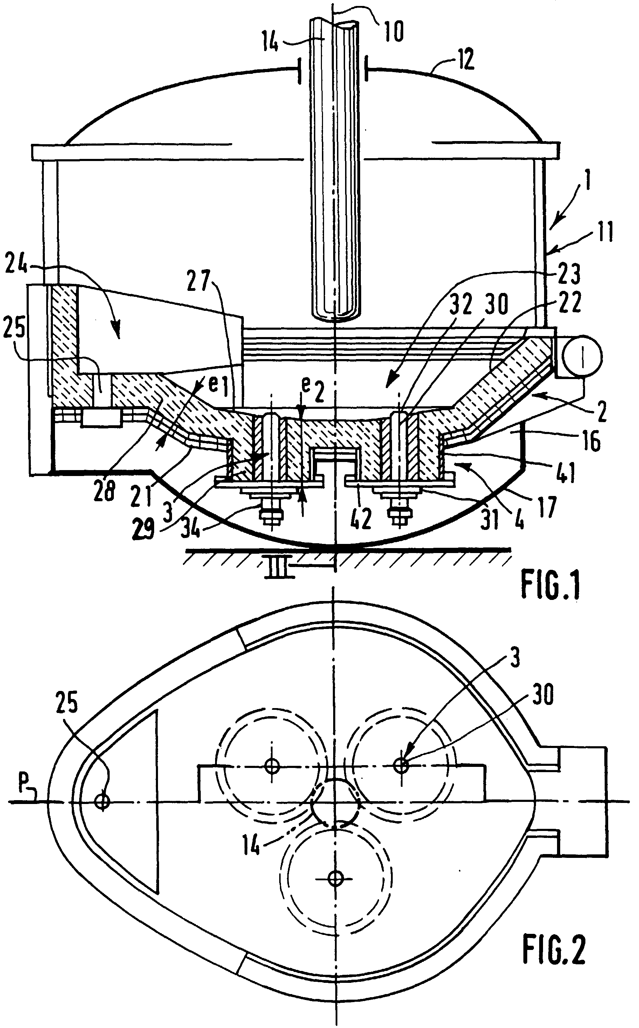

Sur la Figure 1, on a représenté, en coupe longitudinale, un four à arc électrique comportant une cuve 1 de forme globalement cylindrique symétrique par rapport à un plan vertical P et constituée d'un fond 2 et d'une paroi latérale 11, fermée à sa partie supérieure par un couvercle amovible 12.

Le fond 2 de la cuve est constitué d'une paroi métallique externe 21 recouverte d'un revêtement 22 en matière réfractaire qui forme la sole du four, celle-ci présentant la forme d'une cuvette 23 généralement centrée sur un axe vertical 10 placé dans le plan longitudinal de symétrie P.

L'ensemble de la cuve 1 est monté sur un bâti 16 reposant sur un socle fixe par l'intermédiaire de parties arrondies 17 et pouvant ainsi basculer vers l'avant ou l'arrière sous l'action de moyens non représentés.

La cuve 1 peut avantageusement être munie, vers l'avant, d'une partie avancée 24 dont le fond forme un seuil dans lequel est ménagé un orifice 25, à axe sensiblement vertical, fermé, par exemple, par une busette à tiroir et permettant la coulée de l'acier. Cependant, la partie avancée 24 pourrait aussi être munie d'un orifice formant un bec de coulée de l'acier par déversement.

Vers l'arrière, la sole 22 remonte jusqu'à un seuil 26 placé au-dessus du niveau du seuil 25 de coulée de l'acier et muni d'un orifice de décrassage associé à un bec permettant l'évacuation du laitier par basculement du four vers l'arrière.

Le four est chauffé par arc électrique au moyen d'une ou plusieurs électrodes consommables 14 montées déplaçables verticalement sur un support non représenté et passant dans des orifices 15 du couvercle 12 pour pénétrer à l'intérieur de la cuve 1. Le four est du type à courant continu et comporte donc une ou plusieurs électrodes de sole 3 placées dans la partie centrale du fond 2 de la cuve et traversant le revêtement réfractaire 22.

Dans le mode de réalisation représenté à titre de simple exemple, le four 1 est muni d'une électrode consommable 14 placée dans l'axe 10 de la cuve 1 et associée à trois électrodes de sole 3 qui peuvent être disposées au sommet d'un triangle équilatéral centré sur l'axe 10.

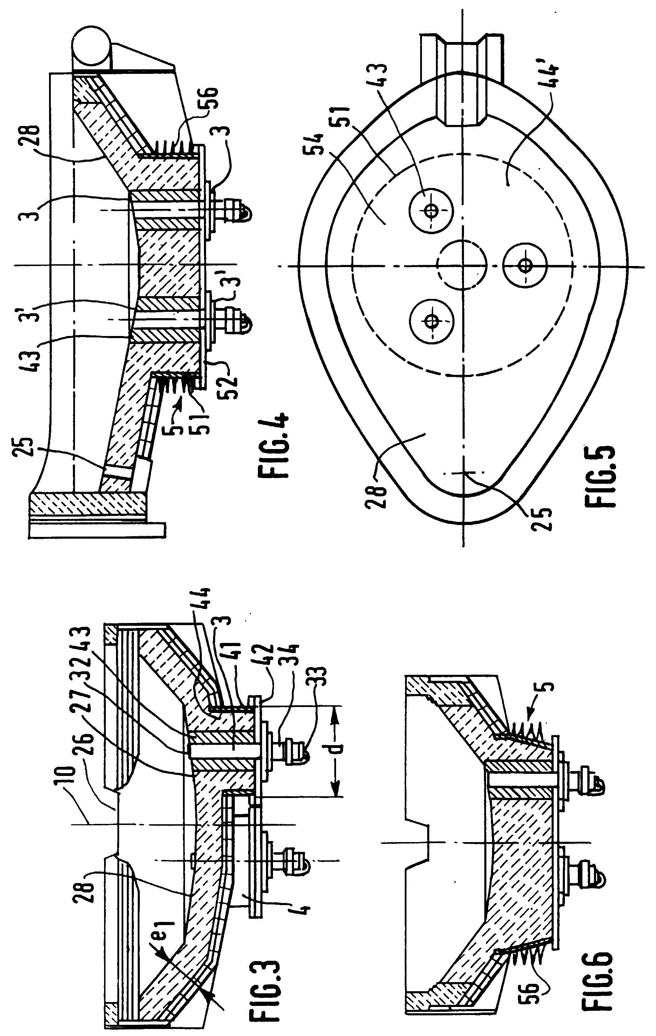

Comme on l'a indiqué sur les Figures 1 et 3, la paroi externe 21 du fond 2 de la cuve est munie, à l'emplacement de chaque électrode de sole 3, d'une partie en saillie formant un bossage 4 limité par une paroi latérale sensiblement cylindrique 41 centrée sur l'axe 30 de l'électrode et s'étendant jusqu'à une plaque 42 formant une face plane perpendiculaire à l'axe 30 et sur laquelle l'électrode peut être fixée, par exemple, par une bride 31.

Dans l'exemple représenté, notamment sur la Figure 3, chaque électrode de sole 3 est constituée d'un barreau massif en métal conducteur qui traverse toute l'épaisseur de la sole 22 depuis la plaque de fixation 42 jusqu'à la face interne 27 de la cuvette formant la partie centrale de la sole.

L'espace annulaire 44 compris entre chaque électrode de sole 3 et la paroi latérale 41 de la partie en saillie 4 qui l'entoure, est rempli d'une matière réfractaire qui peut être de même nature que celle qui recouvre le reste de la sole.

Cependant, il est avantageux que chaque électrode 3 soit entourée d'une pièce tubulaire 43 en matière réfractaire spéciale qui s'étend sur toute la hauteur de l'électrode, entre la plaque de fixation 42 et la surface 27 de la cuvette. L'espace annulaire 44 placé entre ladite pièce tubulaire 43 et la paroi latérale 41 de la partie en saillie 4 est rempli d'une matière réfractaire de même nature que celle qui recouvre la partie restante 28 de la sole.

L'épaisseur de réfractaire recouvrant ladite partie restante 28 peut être déterminée de la façon habituelle en tenant compte d'une usure normale de la matière réfractaire résultant, notamment, du contact avec la ferraille lors du chargement et de la fusion de celle-ci, des déplacements du bain d'acier et des surchauffes éventuelles. On sait, en effet, qu'il faut périodiquement remplacer ou, au moins, réparer le revêtement réfractaire 22 pour éviter des surchauffes localisées de la paroi externe 21 aux endroits où l'épaisseur restante de réfractaire ne permettrait plus de protéger suffisamment cette paroi. De telles surchauffes entraînent, en effet, des déformations de la paroi 21 qui, elles-mêmes, peuvent accélérer la détérioration du réfractaire.

On peut donc déterminer l'épaisseur e1 qu'il y a lieu de donner à la matière réfractaire dans la partie courante 28 de la sole pour que celle-ci résiste, sans intervention, à un certain nombre de coulées constituant un cycle de fonctionnement du four.

En revanche, l'épaisseur e2 de matière réfractaire dans chaque partie en saillie 4, qui correspond à la distance entre la plaque de fixation 42 et la face interne 27 de la sole, est déterminée en tenant compte des surchauffes dues, notamment, aux arcs électriques et au passage du courant, de façon que l'épaisseur de réfractaire protégeant la paroi latérale 41 et la plaque de fixation 42 de l'électrode reste suffisante jusqu'à la fin du cycle de fonctionnement pour que lesdites parois métalliques 41, 42, limitant le bossage 4 ne soient pas soumises à des surchauffes. De la sorte, toutes les parties de la sole sont susceptibles de résister au même nombre de coulées.

Si l'électrode 3 est constituée d'un barreau métallique, son extrémité 32 tournée vers l'intérieur du four risque de fondre au contact du bain d'acier, compte tenu de l'élévation de température due au passage du courant. Cependant, l'extrémité opposée du barreau 3 qui dépasse au-delà de la plaque de fixation de la plaque 42 et sur laquelle est réalisée la connexion électrique, peut être entourée d'un dispositif de refroidissement intense 34, par exemple en forme de manchon parcouru par de l'eau et fixé directement sur l'électrode 3 ou sur la plaque 42. On limite ainsi la progression vers l'extérieur de la partie fondue de l'électrode 3. L'utilisation, selon l'invention, de bossages 4 pour la fixation de chaque électrode permet d'éloigner le dispositif de refroidissement 34 du ménisque limitant la partie fondue et, par conséquent, de laisser celui-ci descendre dans l'épaisseur du revêtement réfractaire sans risquer une surchauffe excessive de la paroi externe métallique 41.

Cependant, en limitant, selon l'invention, la largeur d du bossage 4 à la valeur nécessaire pour absorber l'élévation de température autour de l'électrode, compte tenu de la nature du réfractaire, on évite d'alourdir le fond de la cuve puisque la partie restante 28 de la sole 2 est recouverte de l'épaisseur e1 du réfractaire simplement suffisante pour résister au nombre de coulées correspondant à un cycle.

De la sorte, les opérations de maintenance sont simplifiées et, en cas de démontage et de transfert de la cuve ou du fond, il n'est pas nécessaire d'augmenter la capacité de levage des moyens de manutention.

D'une façon générale, le gain de poids obtenu grâce à la forme particulière du fond de cuve, par rapport à un fond d'épaisseur uniforme, est un avantage important pour l'organisation de l'aciérie, son équipement et son exploitation.

Bien entendu, l'invention ne se limite pas aux détails du mode de réalisation qui n'a été décrit qu'à titre de simple exemple.

En particulier, dans le cas où l'on utilise des électrodes de sole relativement rapprochées les unes des autres, il peut être avantageux, comme on l'a représenté sur les Figures 4 et 5, d'équiper le four d'une partie en saillie unique 5 limitée par une paroi latérale 51 qui entoure l'ensemble des électrodes à une certaine distance de celles-ci, jusqu'à une plaque de fixation 45 commune à l'ensemble des électrodes 3, 3'.

Comme on l'a décrit plus haut, chaque électrode 3, 3', peut être entourée d'un fourreau tubulaire 43' en matière réfractaire spéciale qui s'étend sur toute la hauteur de l'électrode, et tout l'espace 54 compris entre chaque fourreau 43 et la paroi latérale 51 est rempli d'une matière réfractaire de même nature que celle qui recouvre la partie restante 28 du four.

D'autre part, la paroi latérale métallique 41 (51) qui entoure chaque bossage 4 (5) peut avoir une forme sensiblement tronconique, comme représenté sur la Figure 6, de façon à pouvoir élargir la section de chaque bossage 4 vers l'intérieur de la cuve sans augmenter son encombrement vers l'extérieur. De même, on peut élargir, du côté interne, la section du fourreau 43 en matière réfractaire spéciale.

On peut aussi noter que la forme du bossage, et notamment le profil, par exemple tronconique, de la paroi latérale 41, (51) peut être déterminée de façon à mieux s'adapter au mode de briquetage ou de remplissage en réfractaire utilisé.

Par ailleurs, on a décrit un four utilisant des électrodes de sole constituées de barres métalliques, mais les mêmes dispositions pourraient être adaptées à d'autres types connus d'électrodes.

## Revendications

1. Four électrique à courant continu comportant une cuve (1) à axe (10) sensiblement vertical limité par un fond (2) en forme de cuvette (23) et une paroi latérale (11) et fermée par un couvercle amovible (12) et au moins deux électrodes reliées chacune à l'un des deux pôles d'une source de courant électrique continu, respectivement au moins une électrode consommable (14) traversant le couvercle (12) pour pénétrer dans la cuve (1) et au moins une électrode de sole (3) traversant le fond (2) de la cuve (1), ce dernier étant constitué d'une paroi externe (21) recouverte d'un revêtement (22) en matière réfractaire formant la sole (22) du four et dont l'épaisseur (e1) est déterminée pour résister à un certain nombre de coulées,
dans lequel la paroi externe (21) du fond (2) de la cuve (1) comporte au moins une partie en saillie (4) s'étendant vers le bas et formant un bossage qui englobe la partie inférieure des électrodes de sole (3), ledit bossage (4) étant limité par une face (42) sensiblement plane, formant une plaque de fixation de chaque électrode de sole (3) et une face latérale (41) qui entoure l'électrode (3) à une certaine distance de celle-ci et se raccorde à la partie restante (28) de la paroi externe (21) du fond (2), l'espace annulaire (44) entre l'électrode (3) et la face latérale (41) de la partie en saillie étant rempli d'une matière réfractaire s'étendant sur toute la longueur de l'électrode de sole (3) entre la plaque de fixation (42) et la face interne (27) de la sole, et se raccordant au revêtement réfractaire (22) recouvrant la partie restante (28) du fond (2).

2. Four électrique selon la revendication 1, caractérisé par le fait que le four comprenant plusieurs électrodes de sole séparées les unes des autres, la cuve (1) est munie de plusieurs bossages (4) ménagés sur la paroi externe (21) du fond (2) et entourant chacun une électrode de sole (3) jusqu'à une plaque (42) de fixation de celle-ci.

3. Four électrique selon les revendications 1 et 2, caractérisé par le fait que chaque électrode de sole (3) est entourée d'une pièce tubulaire (43) en matière réfractaire spéciale qui s'étend sur toute la longueur de l'électrode (3) entre la plaque de fixation (42) et la face interne (27) de la sole (2).

4. Four électrique selon la revendication 3, caractérisé par le fait que la pièce tubulaire (43) en matière réfractaire spéciale remplit tout l'espace annulaire (44) entre l'électrode de sole (3) et la paroi latérale (41) de la partie en saillie (4) correspondante.

5. Four électrique selon la revendication 3, caractérisé par le fait que la pièce tubulaire (43) en matière réfractaire spéciale est entourée d'une gaine (29) en matière réfractaire de même nature que le revêtement de la partie restante (28) du fond (2).

6. Four électrique selon les revendications 1 et 2, caractérisé par le fait que le fond (2) de la cuve (1) est muni d'une partie en saillie unique (5) limitée par une paroi latérale (51) qui entoure l'ensemble des électrodes à une certaine distance de celles-ci et se raccorde, d'un côté à la paroi externe du fond et de l'autre à une plaque de fixation (55) commune à l'ensemble des électrodes de sole (3).

7. Four électrique selon la revendication 6, caractérisé par le fait que chaque électrode de sole (3) est entourée d'une pièce tubulaire (43) en matière réfractaire spéciale, qui s'étend sur toute la hauteur de l'électrode (3) entre la plaque de fixation (55) et la face interne (27) de la sole (2) et que l'espace (54) compris entre chaque pièce tubulaire (43) et la paroi latérale (51) de la partie en saillie (5) est rempli d'une matière réfractaire de même nature que celle qui recouvre la partie restante (28) du fond.

8. Four électrique selon l'une des revendications précédentes, caractérisé par le fait que chaque électrode est associée à des moyens de refroidissement externe et que la largeur (d) et la longueur (e2-e1) de la paroi latérale (41, 51) limitant chaque bossage (4) sont déterminées en fonction de la conductivité thermique de la matière réfractaire remplissant l'espace annulaire (43, 44) entre chaque électrode de sole (3) et ladite paroi latérale (41, 51) et de l'élévation de température prévisible de l'électrode, et en tenant compte dudit refroidissement externe, de façon que la température de ladite paroi latérale (41, 51) et de la plaque de fixation (42) de l'électrode (3) ne dépasse pas un niveau déterminé.

9. Four électrique selon l'une des revendications précédentes, caractérisé par le fait que la longueur (e2) et la largeur (d) de l'espace annulaire (44, 54) entourant chaque électrode à l'intérieur de chaque partie en saillie (4, 5), sont déterminées en fonction de la nature de la matière réfractaire (43) remplissant ledit espace annulaire (44, 54) et en tenant compte de la température prévisible de chaque électrode de sole (3), de façon que ladite matière réfractaire (44, 54) résiste, pour chaque cycle, à un nombre souhaité de coulées, et que l'épaisseur de matière réfractaire recouvrant la partie restante (28) du fond (2) est déterminée en tenant compte de la nature de ladite matière réfractaire de façon à résister à l'usure sensiblement pour le même nombre de coulées.

10. Four électrique selon l'une des revendications 8 et 9, caractérisé par le fait que, chaque électrode de sole (3) est associée à des moyens (34) de refroidissement externe agissant sur la partie de l'électrode qui s'étend au-delà de la plaque de fixation (42) et que la longueur (e2-e1) de la partie en saillie (4, 5) est déterminée en tenant compte de l'élévation de température de l'électrode (3) et de la conductivité thermique de la matière réfractaire (43, 44) de telle sorte que la température de la plaque de fixation (45, 55) ne dépasse pas un niveau déterminé, compte tenu de l'action desdits moyens (34) de refroidissement externe.

11. Four électrique selon l'une des revendications précédentes, caractérisé par le fait que la face latérale (41) de chaque bossage (4) est munie extérieurement d'ailettes de refroidissement (56).

## Patentansprüche

1. Gleichstrom-Elektroofen mit einer Pfanne (1) mit etwa verticaler Achse (10), abgegrenzt von einem schalenförmigen (23) Boden (2) und einer Seitenwand (11), und verschlossen mit einem abnehmbaren Deckel (12), und mindestens zwei Elektroden, die jeweils an einem der beiden Pole einer Gleichstromquelle angeschlossen sind, jeweils mindestens einer verbrauchbaren Elektrode (14), die den Deckel (12) durchquert, um in die Pfanne (1) einzudringen, und mindestens einer Sohlenelektrode (3), die den Boden (2) der Pfanne (1) durchquert, wobei letztere aus einer externen Wand (21) besteht, die von einer Beschichtung (22) aus feuerfestem Stoff überzogen ist und die Sohle (22) des Ofens bildet, und deren Dicke (el) so bestimmt ist, dass sie einer bestimmten Anzahl von Schmelzen standhält, bei dem die externe Wand (21) des Bodens (2) der Pfanne (1) mindestens ein herausragendes Teil (4) umfasst, das sich nach unten erstreckt und einen Buckel bildet, der den unteren Teil der Sohlenelektroden (3) umgibt, wobei der besagte Buckel (4) von einer etwa flachen Fläche (42) abgegrenzt wird, die eine Befestigungsplatte für jede Sohlenelektrode (3) bildet, und von einer seitlichen Fläche (41), die die Elektrode (3) in einem bestimmten Abstand zu dieser umgibt und sich an den restlichen Teil (28) der externen Wand (21) des Bodens (2) anschliesst, wobei der ringförmige Raum (44) zwischen der Elektrode (3) und der seitlichen Fläche (41) des herausragenden Teils mit einem feuerfesten Stoff gefüllt ist, der sich über die ganze Länge der Sohlenelektrode (3) zwischen der Befestigungsplatte (42) und der internen Fläche (27) der Sohle erstreckt und sich an die feuerfeste, den restlichen Teil (28) des Bodens (2) abdeckende Beschichtung (22) anschliesst.

2. Elektroofen nach Anspruch 1, dadurch gekennzeichnet, dass, da der Ofen mehrere, voneinander getrennte Sohlenelektroden umfasst, die Pfanne (1) mit mehreren Buckeln (4) versehen ist, die an der externen Wand (21) des Bodens (2) angeordnet sind und jeweils eine Sohlenelektrode (3) bis zu einer Befestigungsplatte (42) derselben umgeben.

3. Elektroofen nach den Ansprüchen 1 und 2, dadurch gekennzeichnet, dass jede Sohlenelektrode (3) von einem rohrförmigen Teil (43) aus speziellem feuerfesten Stoff umgeben ist, das sich über die ganze Länge der Elektrode (3) zwischen der Befestigungsplatte (42) und der internen Fläche (27) der Sohle (2) erstreckt.

4. Elektroofen nach Anspruch 3, dadurch gekennzeichnet, dass das rohrförmige Teil (43) aus speziellem feuerfesten Stoff den gesamten ringförmigen Raum (44) zwischen der Sohlenelektrode (3) und der seitlichen Wand (41) des entsprechenden herausragenden Teils (4) ausfüllt.

5. Elektroofen nach Anspruch 3, dadurch gekennzeichnet, dass das rohrförmige Teil (43) aus speziellem feuerfesten Stoff von einer Hülle (29) aus feuerfestem Stoff der gleichen Art umgeben ist, wie diejenige der Beschichtung des restlichen Teils (28) des Bodens (2).

6. Elektroofen nach den Ansprüchen 1 und 2, dadurch gekennzeichnet, dass der Boden (2) der Pfanne (1) mit einem einzigen herausragenden Teil (5) ausgestattet ist, das von einer seitlichen Wand (51) abgegrenzt wird, die sämtliche Elektroden in einem bestimmten Abstand zu denselben umgibt, und sich auf einer Seite an die externe Wand des Bodens und auf der anderen Seite an eine gemeinsame Befestigungsplatte (55) aller Sohlenelektroden (3) anschliesst.

7. Elektroofen nach Anspruch 6, dadurch gekennzeichnet, dass jede Sohlenelektrode (3) von einem rohrförmigen Teil (43) aus speziellem feuerfesten Stoff umgeben ist, das sich über die gesamte Höhe der Elektrode (3) zwischen der Befestigungsplatte (55) und der internen Fläche (27) der Sohle (2) erstreckt, und dass der Raum (54) zwischen jedem ringförmigen Teil (43) und der seitlichen Wand (51) des herausragenden Teils (5) mit einem feuerfesten Stoff der gleichen Art gefüllt ist wie derjenige, der den restlichen Teil (28) des Bodens abdeckt.

8. Elektroofen nach einem der vorstehend genannten Ansprüche, dadurch gekennzeichnet, dass jede Elektrode externen Kühlmitteln zugeordnet ist, und dass die Breite (d) und die Länge (e2-el) der seitlichen, jeden Buckel (4) abgrenzenden Wand (41, 51) entsprechend der Wärmeleitfähigkeit des feuerfesten Stoffs bestimmt werden, der den ringförmigen Raum (43, 44) zwischen jeder Sohlenelektrode (3) und der besagten seitlichen Wand (41, 51) ausfüllt, und entsprechend des voraussichtlichen Temperaturanstiegs der Elektrode, und unter Berücksichtigung der besagten externen Kühlung, so dass die Temperatur der besagten seitlichen Wand (41, 51) und der Befestigungsplatte (42) der Elektrode (3) ein bestimmtes Niveau nicht überschreitet.

9. Elektroofen nach einem der vorstehend genannten Ansprüche, dadurch gekennzeichnet, dass die Länge (e2) und die Breite (d) des ringförmigen Raums (44, 54), der jede Elektrode innerhalb eines jeden herausragenden Teils (4, 5) umgibt, entsprechend der Art des feuerfesten Stoffs (43) bestimmt werden, der den besagten ringförmigen Raum (44, 54) füllt, und unter Berücksichtigung der voraussichtlichen Temperatur einer jeden Sohlenelektrode (3), so dass der besagte feuerfeste Stoff (44, 54) bei jedem Zyklus einer gewünschten Anzahl von Schmelzen standhält, und dass die Dicke des feuerfesten, den restlichen Teil (28) des Bodens (2) abdeckenden Stoffs unter Berücksichtigung der Art des besagten feuerfesten Stoffs bestimmt wird, um dem Verschleiss während etwa der gleichen Anzahl von Schmelzen standzuhalten.

10. Elektroofen nach einem der Ansprüche 8 und 9, dadurch gekennzeichnet, dass jeder Sohlenelektrode (3) externe Kühlmittel (34) zugeordnet sind, die auf den Teil der Elektrode einwirken, der sich über die Befestigungsplatte (42) hinaus erstreckt, und dass die Länge (e2-el) des herausragenden Teils (4, 5) unter Berücksichtigung des Temperaturanstiegs der Elektrode (3) und der Wärmeleitfähigkeit des feuerfesten Stoffs (43, 44) bestimmt wird, so dass die Temperatur der Befestigungsplatte (45, 55) ein bestimmtes Niveau nicht überschreitet, aufgrund der Aktion der besagten externen Kühlmittel (34).

11. Elektroofen nach einem der vorstehend genannten Ansprüche, dadurch gekennzeichnet, dass die seitliche Fläche (41) eines jeden Buckels (4) von aussen mit Kühlrippen (56) bestückt ist.

## Claims

1. DC electric furnace comprising a chamber (1) whose axis (10) is substantially vertical, limited by a bottom (2) in the shape of a basin (23) and a lateral wall (11), and closed by a movable cover (12) and at least two electrodes each connected to one of two poles of a DC power supply, said poles being respectively at least one consumable electrode (14) that passes through the cover (12) to put into the chamber (1) and at least one hearth electrode (3) crossing the bottom (2) of chamber (1), said bottom being composed of an outer wall (21) covered by a coating (22) made of refractory material forming the hearth (22) of the furnace, the thickness of which (el) is dimensioned to resist a certain number of pouring operations, wherein the outer wall (21) of the bottom (2) of the chamber (1) comprises at least one projecting component (4) extending downwards to form a boss that encloses the lower section of each hearth electrodes (3), the said boss (4) consisting of a substantially flat surface (42) that forms a fastening plate for each hearth electrode (3) and a lateral surface (41) that surrounds electrode (3) leaving a certain distance, and connects to the remaining section (28) of the outer wall (21) of bottom (2), the annular space (44) between electrode (3) and the lateral surface (41) of the boss being filled with a refractory material covering the entire length of the hearth electrode (3) between the fastening plate (42) and the inner surface (27) of the hearth and connecting to the refractory coating (22) covering the remaining section (28) of the bottom (2).

2. Electric furnace of claim 1 characterized by the fact that, the furnace comprising several hearth electrodes separated from one another, the chamber (1) is provided with several bosses (4) arranged on the outer wall (21) of the bottom (2), each boss surrounding a hearth electrode (3) up to a fastening plate (42) for said electrode.

3. Electric furnace of claims 1 and 2 characterized by the fact that each hearth electrode (3) is surrounded by a tubular part (43) made of special refractory material that lies along the total length of the hearth electrode (3) between the fastening plate (42) and the inner surface (27) of the hearth (2).

4. Electric furnace of claim 3 characterized by the fact that the tubular part (43) made of special refactory material fills the whole annular space (44) between the hearth electrode (3)and the and the lateral surface (41) of the corresponding boss (4).

5. Electric furnace of claim 3 characterized by the fact that the tubular part (43) made of special refactory material is surrounded by a sheath (29) of the same refractory material as the coating of the remaining section (28) of the bottom (2).

6. Electric furnace of claims 1 and 2 characterized by the fact that the bottom (2) of the chamber (1) is provided with a single boss (5) limited by a lateral surface (51) that surrounds all the electrodes at a certain distance from them and is joined together from one side of the external surface of the bottom to the other by a fastening plate (55) that is common to all the hearth electrodes (3).

7. Electric furnace of claim 6 characterized by the fact that each hearth electrode (3) is surrounded by a tubular part (43) of special refractory material that lies along the whole height of hearth electrode (3) between the fastening plate (55) and the internal surface (27) of the hearth (2) and that the space (54) between each tubular part (43) and the lateral surface (51) of the boss (5) is filled with similar refractory material to that which covers the remaining section (28) of the bottom.

8. Electric furnace of any of the preceeding claims characterized by the fact that each electrode is provided with external cooling means and that the width (d) and the length (e2-el) of the lateral surface (41, 51) of each boss (4) are determined according to the thermal conductivity of the refractory material that fills the annular space (43, 44) between each hearth electrode (3) and the said surface (41, 51) and to the predicted temperature increase of the electrode, and taking into account the said external cooling, in such a way that the temperature of the lateral surface (41, 51) and the fastening plate (42) of the hearth electrode (3) does not exceed a preset level.

9. Electric furnace of any of the preceeding claims characterized by the fact that the length (e2) and the width (d) of the annular space (44, 54) surrounding each electrode inside each boss (4, 5) are determined according to the type of refractory material (43) filling the said annular space (44, 54) and taking into account the predicted temperature of each hearth electrode (3) in such a way that, for each cycle, the refractory material (44, 54) is able to resist the required number of pouring operations, and that the thickness of the refractory material covering the remaining section (28) of the bottom (2) is determined taking into account the type of refractory material in such a way as to resist wear for substantially the same number of pouring operations.

10. Electric furnace of either of claims 8 and 9 characterized by the fact that each hearth electrode (3) is provided with external cooling means (34) acting on the section of the electrode that lies beyond the fastening plate (42) and that the length (e2-el) of the boss (4, 5) is determined according to the increase in temperature of the electrode (3) and the thermal conductivity of the refractory material (43, 44) in such a way that the temperature of the fastening plate (45, 55) does not exceed a preset level, taking into account the action of the said external cooling means (34).

11. Electric furnace of any of the preceeding claims characterized by the fact that the lateral surface (41) of each boss (4) is provided with external cooling ribs (56).
